# EUROPEAN PATENT APPLICATION

(11) **EP 3 466 987 A1**
(43) Date of publication of application: **10.04.2019**
(21) Application number: 17806619.7
(22) Date of filing: 29.05.2017
(51) Int. Cl.: C08F 2/44, B01D 53/22, B01D 69/00, C08F 265/06

(54) **METHOD FOR PRODUCING DN GEL MEMBRANE**

(30) Priority: 30.05.2016 JP 2016107584
(71) Applicant: Sumitomo Chemical Company Limited, Tokyo 104-8260 (JP)
(72) Inventor: KASAHARA, Shohei, Osaka-shi Osaka 554-8558 (JP); OTA, Yudai, Osaka-shi Osaka 554-8558 (JP); MATSUYAMA, Hideto, Kobe-shi Hyogo 657-8501 (JP); KAMIO, Eiji, Kobe-shi Hyogo 657-8501 (JP); MOGHADAM, Farhad, Seoul 04763 (KR)
(74) Representative: Winter, Brandl, Fürniss, Hübner, Röss, Kaiser, Polte - Partnerschaft mbB
(86) International application number: PCT/JP2017/019950
(87) International publication number: WO 2017/209064

(57) **Abstract**

A method of producing a DN gel membrane includes a step (1) including producing a 1 st gel membrane by (i) casting, on a substrate, a solution containing an ionic liquid A and an ionic liquid B, the ionic liquid A being made up of 1 st monomers each of which has a polymerizable functional group and (ii) polymerizing the 1st monomers; and a step (2) including producing the DN gel membrane by (i) immersing the 1 st gel membrane in a solution containing 2nd monomers which are different from the 1 st monomers and (ii) polymerizing the 2nd monomers. This method allows for continuous-type production which is suitable for industrial mass production of DN gel membranes or acid gas separation membranes.

## Description

### Technical Field

The present invention relates to a method of producing a double-network (DN) gel membrane.

### Background Art

A "gel" is defined as a "polymer which is insoluble in any solvent and has a three-dimensional network structure, and a swollen body of the polymer" (see New Edition Polymer Dictionary (SHINBANKOUBUNSHIZITEN) (1988)). Especially a gel, which has absorbed a large amount of solvent, has properties between those of a liquid and those of a solid, and has the solvent stably taken into a three-dimensional network (network) of an organic polymer or the like. In particular, a gel in which water is used as a solvent (such a gel is hereinafter referred to as "hydrogel" or "aqueous gel") is also an important material constructing a living body. In addition, gels have been widely used in the fields of many industries such as hygiene product industry, daily commodities industry, food packaging industries, medical and pharmaceutical industries, agriculture and horticulture industries, civil engineering and construction industries, chemical industries, electronic and electric industries, and sports and leisure industries (Non-patent Literature 1).

A conventional gel, which has swelled in a solvent (particularly water), is generally weak in an equilibrium swelling state (state in which a gel is put in a solvent to be absorbed by the gel, so that the gel does not absorb the solvent any more). Therefore, the conventional gel poses a critical problem that the conventional gel is difficult to use in a structural material or in a material requiring mechanical strength.

Lately, therefore, there have been reports on gels with which the above problem is resolved. Examples of such gels encompass a double-network (DN) gel membrane and an interpenetrating polymer networks (IPN) gel membrane, each of which has an extremely high mechanical strength due to the formation of a three-dimensional structure in which two types of independent polymers are entangled with each other.

As a method of producing the IPN gel membrane, for example, there has been a report of a method including the steps of (i) producing a 1st network gel by (i-a) preparing a pre-gel aqueous solution by dissolving a monomer, a crosslinking agent, and others in water, (i-b) placing the pre-gel aqueous solution in a mold, and then (i-c) polymerizing the monomer and (ii) forming a 2nd network gel by (ii-a) causing an ionic monomer or a neutral monomer to permeate into the 1st network gel, so as to polymerize the ionic monomer or the neutral monomer.

### Citation List

### [Patent Literature]

[Patent Literature 1]
Japanese Patent Application Publication Tokukai No. 2011-178843 (Publication date: September 15, 2011)

### [Non-patent Literature]

[Non-patent Literature 1]
Nagata Y, Kajiwara K, "Gel handbook", Chapter 3: Application, NTS Inc. (1997).

### Summary of Invention

### Technical Problem

Conventional methods of producing DN gel membranes and IPN gel membranes, such as the method of producing an IPN gel membrane disclosed in Patent Literature 1, are closed system (batch type) methods which require a mold or the like. Therefore, the conventional methods unfortunately cannot be applied to continuous-type production which is suitable for industrial mass production.

### Solution to Problem

As a result of diligent research, the inventors of the present invention found that a DN gel membrane can be produced with a continuous-type method by employing a production method including a step of producing a 1st gel membrane by a cast method while nonvolatile ionic liquids are used as (i) a solvent used for formation of the 1st gel membrane and (ii) 1st monomers.

The present invention can be a DN gel membrane production method or an acid gas separation membrane production method described in [1] through [13] below.
[1] A method of producing a DN gel membrane, including:
   a step (1) including producing a 1st gel membrane by (i) casting, on a substrate, a solution containing an ionic liquid A and an ionic liquid B, the ionic liquid A being made up of 1st monomers each of which is a molecule having at least one polymerizable functional group and (ii) polymerizing the 1st monomers; and
   a step (2) including producing the DN gel membrane by (i) immersing the 1st gel membrane in a solution containing 2nd monomers which are different from the 1st monomers and (ii) polymerizing the 2nd monomers.
[2] The method described in [1], in which the ionic liquid B in the step (1) contains anions of at least one kind selected from the group consisting of tetrafluoroboric acid ion, BF₃CF₃-, BF₃C₂F₅-, BF₃C₃F₇-, BF₃C₄F₉-, hexafluorophosphoric acid ion, bis(trifluoromethanesulfonyl)imide ion, bis(fluoromethanesulfonyl)imide ion, bis(pentafluoroethanesulfonyl)imide ion, perchloric acid ion, tris(trifluoromethanesulfonyl)carbon acid ion, trifluoromethanesulfonic acid ion, dicyanamido ion, trifluoroacetic acid ion, organic carboxylic acid ion, halide ion, and hydroxide ion.
[3] The method described in [1] or [2], in which the ionic liquid B in the step (1) contains cations of at least one kind selected from the group consisting of cations represented by the following Formulas (I) through (IV):

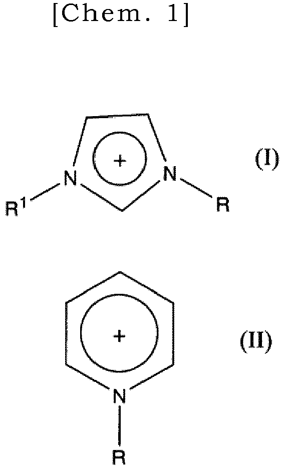

   [NRₓH₄₋ₓ]⁺ (III)

   [PRₓH₄₋ₓ]⁺ (IV)

   where (i) R and R¹ each represent a linear or branched C1-C16 alkyl group or a hydrogen atom, the alkyl group containing at least one methylene group which can be substituted by an oxygen atom and (ii) in each of Formulas (III) and (IV), x represents an integer of 1 to 4.
[4] The method described in any one of [1] through [3] in which the 1st monomers contain at least one kind selected from the group consisting of an anion site and an anion; and the anion site is of at least one kind selected from the group consisting of *-BF₃⁻, *-CF₂BF₃⁻, *-C₂F₄BF₃⁻, *-C₃F₆BF₃⁻, *-C₄F₈BF₃⁻, *-PF₅⁻, *-CF₂SO₂N⁻(CF₃SO₂), *-CF₂SO₂C⁻(CF₃SO₂)₂, *-CF₂SO₃⁻, *-CF₂COO⁻, and *-R^{b}COO⁻ (where (i) R^{b} represents a C1-C4 alkylene group, a phenylene group, or a naphthylene group and (ii) "*" represents a point at which the anion site binds to another group), and the anion is of at least one kind selected from the group consisting of tetrafluoroboric acid ion, BF₃CF₃⁻, BF₃C₂F₅⁻, BF₃C₃F₇-, BF₃C₄F₉⁻, hexafluorophosphoric acid ion, bis(trifluoromethanesulfonyl)imide ion, bis(fluoromethanesulfonyl)imide ion, bis(pentafluoroethanesulfonyl)imide ion, perchloric acid ion, tris(trifluoromethanesulfonyl)carbon acid ion, trifluoromethanesulfonic acid ion, dicyanamido ion, trifluoroacetic acid ion, organic carboxylic acid ion, halide ion, and hydroxide ion.
[5] The method described in any one of [1] through [4], in which the 1st monomers contain cation sites of at least one kind selected from the group consisting of cation sites represented by the following Formulas (Ia) through (IVa):

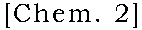

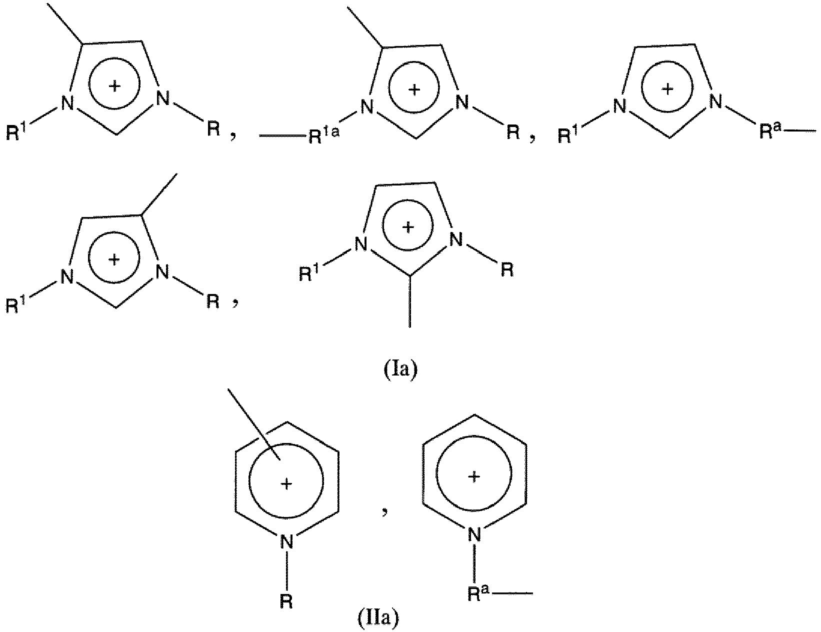

   *-[R^{a}-NR_{y-1}H_{3-y]}⁺ (IIIa)

   *-[R^{a}-PR_{y-1}H_{3-y}]⁺ (IVa)

   where (i) R and R¹, which may be identical or different, each represent a linear or branched C1-C16 alkyl group or a hydrogen atom, the alkyl group containing at least one methylene group which can be substituted by an oxygen atom, (ii) R^{a} and R^{1a}, which may be identical or different, each represent a linear or branched C1-C12 alkylene group, the alkylene group containing at least one methylene group which can be substituted by an oxygen atom, (iii) y represents an integer of 1 to 3, and (iv) "*" represents a point at which cation site binds to another group.
[6] The method described in any one of [1] through [5], in which the at least one polymerizable functional group of each of the 1st monomers is of at least one kind selected from the group consisting of (i) a group containing a carbon-carbon double bond, (ii) a group containing a carbon-carbon triple bond, (iii) an epoxy group, and (iv) a group containing an epoxy group.
[7] The method described in any one of [1] through [6], in which each of the 1st monomers is 3-(methacryloylamino)propyl-trimethylammonium chloride.
[8] The method described in any one of [1] through [7], in which the 2nd monomers are monomers of at least one kind selected from the group consisting of acrylamide and a derivative thereof, 2-hydroxyethyl methacrylate, 2-hydroxyethyl acrylate, hydroxypropyl acrylate, and vinylpyrrolidone.
[9] The method described in any one of [1] through [8], in which each of the 2nd monomers is N,N-dimethylacrylamide.
[10] The method described in any one of [1] through [9], in which a ratio of an amount (the number of moles) of the 2nd monomers added to an amount (the number of moles) of the 1st monomers added (2nd monomers/1st monomers) is not less than 1.
[11] The method described in any one of [1] through [10], in which the solution in the step (1) further contains a crosslinking agent.
[12] The method described in [11], in which the crosslinking agent is of at least one kind selected from the group consisting of N,N'-methylenebisacrylamide, N,N'-propylene-bis-acrylamide, di(acrylamidomethyl)ether, 1,2-diacrylamide ethylene glycol, 1,3-diacryloyl ethylene urea, ethylene diacrylate, N,N'-bisacrylic cystamine, triallyl cyanurate, and triallyl isocyanurate.
[13] A method of producing an acid gas separation membrane, including:
   a step (1) including producing a 1st gel membrane by (i) casting, on a substrate, a solution containing an ionic liquid A and an ionic liquid B, the ionic liquid A being made up of 1st monomers each of which is a molecule having at least one polymerizable functional group and (ii) polymerizing the 1st monomers;
   a step (2) including producing the DN gel membrane by (i) immersing the 1st gel membrane in a solution containing 2nd monomers which are different from the 1st monomers and (ii) polymerizing the 2nd monomers; and
   a step (3) including producing the acid gas separation membrane by immersing the DN gel membrane in a solution which contains an ionic liquid C containing a group that reacts with an acid gas.

### Advantageous Effects of Invention

With a production method in accordance with an embodiment of the present invention, it is advantageously possible to carry out continuous-type production which is suitable for industrial mass production of DN gel membranes or acid gas separation membranes.

### Brief Description of Drawings

Fig. 1 is a view schematically illustrating a method of measuring a tensile fracture resistance of a DN gel membrane in accordance with an embodiment of the present invention.
Fig. 2 is a view schematically illustrating a method of measuring an indentation fracture resistance of a DN gel membrane in accordance with an embodiment of the present invention.
Fig. 3 is a set of graphs showing the results of measuring tensile fracture resistances of respective DN gel membranes produced in Examples 1 through 6.
Fig. 4 is a set of graphs showing the results of measuring indentation fracture resistances of respective DN gels produced in Example 11 and Reference Example.
Fig. 5 is a set of graphs showing the results of measuring CO₂/N₂ selectivity with use of a CO₂ separation membrane produced in Example 12.
Fig. 6 is a set of graphs showing the results of measuring permeability coefficients of CO₂ and N₂ with use of a CO₂ separation membrane produced in Example 16.
Fig. 7 is a set of graphs showing the results of measuring CO₂/N₂ selectivity and permeability coefficients of CO₂ and N₂ with use of CO₂ separation membranes produced in Examples 13 through 15.
Fig. 8 is a set of graphs showing the results of measuring CO₂/N₂ selectivity and permeability coefficients of CO₂ and N₂ with use of CO₂ separation membranes produced in Examples 16 through 19.

### Description of Embodiments

The following description will discuss embodiments of the present invention in detail. Note that expressions such as "A to B" hereinafter mean "not less than A and not more than B". The "*" (asterisk) in any applicable formula means a point at which the formula binds to another group. Room temperature (normal temperature) herein means 10°C to 30°C.

The term "anion" herein refers to an ion which has negative charge and has no point at which the ion can have a covalent bond with another group. The term "cation" herein refers to an ion which has positive charge and has no point at which the ion can have a covalent bond with another group. Furthermore, the term "anion site" herein refers to an ion which has negative charge and has a point at which the ion can have a covalent bond with another group. The term "cation site" herein refers to an ion which has positive charge and has a point at which the ion can have a covalent bond with another group.

### [Embodiment 1: Method of producing DN gel membrane]

A DN gel membrane production method in accordance with Embodiment 1 of the present invention includes:
a step (1) including producing a 1st gel membrane by (i) casting (spreading), on a substrate, a solution containing an ionic liquid A and an ionic liquid B, the ionic liquid A being made up of 1st monomers each of which is a molecule having at least one polymerizable functional group and (ii) polymerizing the 1st monomers; and
a step (2) including producing the DN gel membrane by (i) immersing the 1st gel membrane in a solution containing 2nd monomers which are different from the 1st monomers and (ii) polymerizing the 2nd monomers.

In an embodiment of the present invention, the term "DN gel membrane" is a shortened term for "double-network gel membrane". A DN gel membrane is a gel having a three-dimensional structure in which two types of independent polymers are entangled with each other. More specifically, a DN gel membrane has a three-dimensional structure in which a hard and brittle gel and a soft and flexible gel are combined. Since the DN gel had the three-dimensional structure, the DN gel has high diffusivity. For example, even in a case where a DN gel is a gel containing a solvent in an amount of 80% by weight, the DN gel has (i) toughness higher than that of an ordinary gel and (ii) durability and formability which are higher than those of an ordinary gel.

In an embodiment of the present invention, an "ionic liquid" is also generally referred to as "ambient temperature molten salt" or simply "molten salt", for example. The ionic liquid is a salt having a molten state at a wide range of temperatures including room temperature (normal temperature), and is a salt which is in liquid form at a temperature of not more than 100°C. The ionic liquid is preferably a stable ionic liquid which is in liquid form at room temperature (normal temperature) or a temperature close to room temperature.

### [Step (1): Polymerization of 1st monomer]

The step (1) in the DN gel membrane production method in accordance with an embodiment of the present invention is a step in which (i) a solution, which contains an ionic liquid A made up of 1st monomers and an ionic liquid B, is cast (spread) on a substrate and (ii) the 1st monomers are polymerized, so that a 1st gel membrane (also referred to as "1st network gel membrane"), which includes a polymer of the 1st monomers as a constituent element, is produced.

The ionic liquid B is a liquid containing anions and cations. The ionic liquid B is nonvolatile, and is preferably added as a solvent in the step (1). Because the ionic liquid A and the ionic liquid B (described later) are nonvolatile, it is possible to use, to produce the 1st gel membrane, a cast method in the step (1) in the DN gel membrane production method in accordance with an embodiment of the present invention.

Each of the anions contained in the ionic liquid B can be an anion which causes the ionic liquid B to be nonvolatile. Examples of such an anion encompass, but are not particularly limited to, tetrafluoroboric acid ion, BF₃CF₃⁻ , BF₃C₂F₅⁻, BF₃C₃F₇⁻, BF₃C₄F₉⁻, hexafluorophosphoric acid ion, bis(trifluoromethanesulfonyl)imide ion, bis(fluoromethanesulfonyl)imide ion, bis(pentafluoroethanesulfonyl)imide ion, perchloric acid ion, tris(trifluoromethanesulfonyl)carbon acid ion, trifluoromethanesulfonic acid ion, dicyanamido ion, trifluoroacetic acid ion, organic carboxylic acid ion, halide ion, and hydroxide ion. Among the anions listed above as examples of the anion contained in the ionic liquid B, tetrafluoroboric acid ion is preferable. One kind of these anions can be contained, or two or more kinds of these anions can be contained.

Each of the cations contained in the ionic liquid B can be a cation which causes the ionic liquid B to be nonvolatile. Examples of such a cation encompass, but are not particularly limited to, cations represented by the following Formulas (I) through (IV).

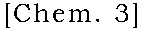

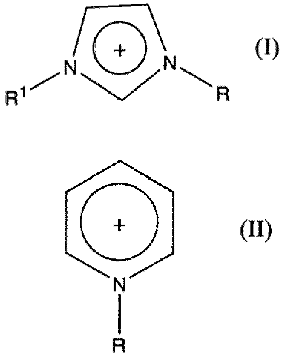

[NRₓH₄₋ₓ]⁺ (III)

[PRₓH₄₋ₓ]⁺ (IV)

where (i) R and R¹ each represent a linear or branched C1-C16 alkyl group or a hydrogen atom, the alkyl group containing at least one methylene group which can be substituted by an oxygen atom, (ii) in each of Formulas (III) and (IV), x represents an integer of 1 to 4.

Examples of the linear or branched C1-C16 alkyl group as R in the Formulas (I) through (IV) and as R¹ in the Formula (I) encompass groups such as methyl, ethyl, n-propyl, isopropyl, n-butyl, isobutyl, sec-butyl, t-butyl, pentyl, hexyl, heptyl, octyl, nonyl, decyl, undecyl, and dodecyl. The carbon number is preferably 1 to 8, and more preferably 1 to 6.

The at least one methylene group contained in the linear or branched C1-C16 alkyl group as R in the Formulas (I) through (IV) and a R¹ in the Formula (I) can be substituted by an oxygen atom. Examples of such a methylene group encompass *-CH₂OCH₃, *-CH₂CH₂OCH₃, *-CH₂OCH₂CH₃, *-CH₂CH₂OCH₂CH₃, and *-(CH₂)_{P}(OCH₂CH₂)_{q}OR² (where (i) p represents an integer of 1 to 4, (ii) q represents an integer of 1 to 4, (iii) R² represents CH₃ or C₂H₅, and (iv) "*" represents a point at which the methylene group binds to a nitrogen atom of each of Formulas (I) through (IV)).

Among the cations listed above as examples, the cation represented by the Formula (I) is preferable, and 1-ethyl-3-methylimidazolium ion is preferable. One kind of these cations can be contained, or two or more kinds of these cations can be contained.

The ionic liquid A in the step (1) in the DN gel membrane production method in accordance with an embodiment of the present invention is an ionic liquid made up of 1st monomers each of which is a molecule having at least one polymerizable functional group. That is, the 1st monomers in accordance with an embodiment of the present invention are equal to the ionic liquid A. The 1st monomers are an ionic liquid containing (i) at least one selected from the group consisting of an anion site and an anion, (ii) at least one selected from the group consisting of a cation site and a cation, and (iii) a polymerizable functional group. Examples of each of the 1st monomers encompass (i) a monomer in which an anion site, a cation site, and a polymerizable functional group form, as necessary, a covalent bond via a linking group and (ii) a monomer containing (a) an anion and (b) a cation site and a polymerizable functional group which form a covalent bond via, as necessary, a linking group. The 1st monomers are each preferably a monomer containing an anion, a cation site, and a polymerizable functional group. The ionic liquid A, which is equal to the 1st monomers, is nonvolatile as is the ionic liquid B. In the step (1) in the DN gel membrane production method in accordance with an embodiment of the present invention, because the 1st monomers and the ionic liquid B are both nonvolatile, the 1st gel membrane can be produced by a cast method.

Examples of the anion site contained in each of the 1st monomers in accordance with an embodiment of the present invention encompass, but are not particularly limited to, *-BF₃⁻, *-CF₂BF₃⁻, *-C₂F₄BF₃⁻, *-C₃F₆BF₃⁻, *-C₄F₈BF₃⁻, *-PF₅⁻, *-CF₂SO₂N⁻(CF₃SO₂), *-CF₂SO₂C⁻(CF₃SO₂)₂, *-CF₂SO₃⁻, *-CF₂COO⁻, and *-R^{b}COO⁻ (where (i) R^{b} represents a C1-C4 alkylene group, a phenylene group, or a naphthylene group and (ii) "*" represents a point at which the anion site binds to another group such as a polymerizable functional group, a cation site, or a linking group). Examples of the anion contained in each of the 1st monomers in accordance with an embodiment of the present invention encompass, but are not particularly limited to, anions similar to the examples of the anion contained in the ionic liquid B.

The 1st monomers each preferably contain an anion, more preferably a halide ion, and still more preferably a chloride ion. Note that one kind of each of the anion site and the anion can be contained, or two or more kinds of each of the anion site and the anion can be contained.

Examples of the cation site contained in each of the 1st monomers in accordance with an embodiment of the present invention encompass, but are not particularly limited to, cation sites represented by the following Formulas (Ia) through (IVa): In each of the Formulas (Ia) through (IVa), "*" represents a point at which the cation site binds to another group such as a polymerizable functional group, an anion site, or a linking group.

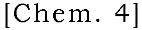

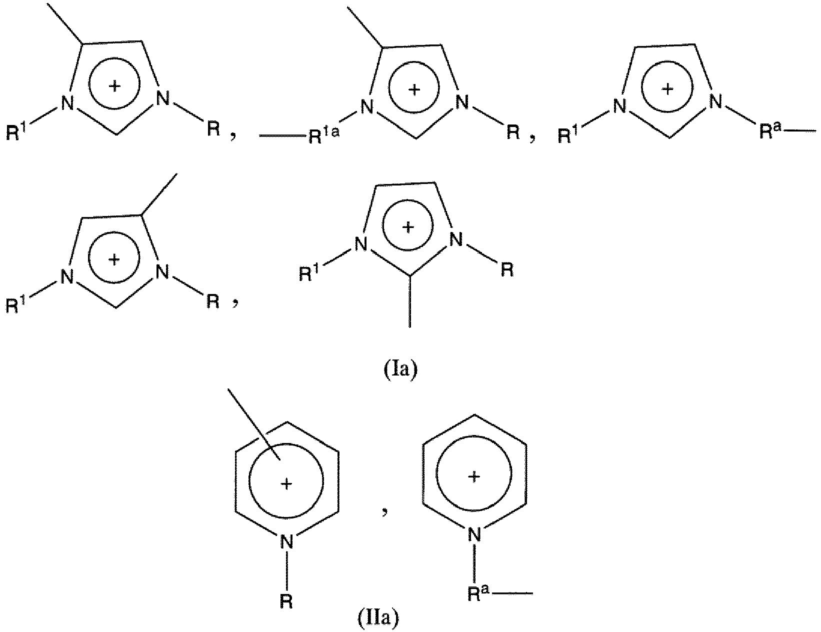

*-[R^{a}-NR_{y-1}H_{3-y]}⁺ (IIIa)

*-[R^{a}-PR_{y-1}H_{3-y}]⁺ (IVa)

where (i) R and R¹, which may be identical or different, each represent a linear or branched C1-C16 alkyl group or a hydrogen atom, the alkyl group containing at least one methylene group which can be substituted by an oxygen atom, (ii) R^{a} and R^{1a}, which may be identical or different, each represent a linear or branched C1-C12 alkylene group, the alkylene group containing at least one methylene group which can be substituted by an oxygen atom, and (iii) y represents an integer of 1 to 3.

The cation site is preferably a cation site represented by the Formula (IIIa). The cation site is more preferably a cation site represented by the Formula (IIIa)where R is a linear or branched C1-C16 alkyl group and R^{a} is a linear or branched C1-C12 alkylene group. The cation site is still more preferably a propylene-trimethylammonium ion site. Note that one kind of these cation sites can be contained, or two or more kinds of these cation sites can be contained.

The linear or branched C1-C16 alkyl group in each of the Formulas (Ia) through (IVa) is, for example, a group similar to the alkyl groups in each of the Formulas (I) through (IV). The at least one methylene group contained in the linear or branched C1-C16 alkyl group in each of the Formulas (Ia) through (IVa) can be substituted by an oxygen atom, and is, for example, a group similar to the examples of the at least one methylene group in each of the Formulas (I) through (IV).

Examples of the linear or branched C1-C12 alkylene group in each of the Formulas (Ia) through (IVa) encompass methylene, ethylene, n-propylene, isopropylene, n-butylene, isobutylene, sec-butylene, pentylene, hexylene, heptylene, octylene.

The at least one methylene group contained in the linear or branched C1-C12 alkylene group in each of the Formulas (Ia) through (IVa) can be substituted by an oxygen atom. Examples of such a methylene group encompass *-CH₂OCH₂-*, *-CH₂CH₂OCH₂-*, *-CH₂OCH₂CH₂-*, *-CH₂CH₂OCH₂CH₂-*, and *-(CH₂)ᵣ(OCH₂CH₂)ₛOR³-* (where (i) r represents an integer of 1 to 4, (ii) s represents an integer of 1 to 4, (iii) R³ represents CH₂ or C₂H₄, and (iv) "*" represents a point at which the methylene group binds to a nitrogen atom in each of the Formulas (Ia) through (IVa)).

Examples of the cation contained in each of the 1st monomers in accordance with an embodiment of the present invention encompass, but are not particularly limited to, cations similar to the examples of the cation contained in the ionic liquid B.

The 1st monomer in accordance with an embodiment of the present invention can be formed by at least one of the cation site and the anion site linking with a polymerizable functional group via, as necessary, a suitable linking group.

Examples of the polymerizable functional group encompass (i) a group containing a carbon-carbon double bond, (ii) a group containing a carbon-carbon triple bond, (iii) an epoxy group (oxirane), and (iv) a group containing an epoxy group. Examples of the polymerizable functional group further encompass groups derived from acrylic acid, methacrylic acid, acrylamide, methacrylamide, ethylene, styrene, or glycidyl ether. That is, the 1st monomer in accordance with an embodiment of the present invention can include the polymerizable functional group.

Specific examples of the polymerizable functional group encompass groups shown below:
CH₂=CHCOO-*; CH₂=C(CH₃)COO-*; CH₂=CHCONR^{c}-*; CH₂=C(CH₃)CONR^{c}-*; CH₂=CH(CH₂)ₙ-*; CH₂=C(CH₃)(CH₂)ₙ-*; PhCH₂=CH-*; 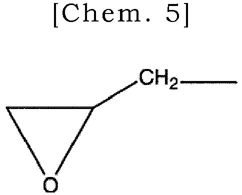 where (i) n represents an integer of 0 to 4, (ii) R^{c} represents a hydrogen atom or a C1-C4 alkyl group, and (iii) "*" represents a point at which the polymerizable functional group binds to another group such as a polymerizable functional group, a cation site, an anion site, or a linking group.

The polymerizable functional group is preferably a methacryloylamino group (CH₂=C(CH₃)CONH-*). Note that one kind of these polymerizable functional groups can be contained, or two or more kinds of these polymerizable functional groups can be contained.

Examples of the linking group encompass, but are not particularly limited to, the following bivalent groups: *-CO-*; *-CONH-*; *-NHCO-*; *-(CH₂)ₘ-*; *-O-*; and *-S-*.
where (i) m represents an integer of 1 to 4 and (ii) "*" represents a point at which the linking group binds to another group such as a polymerizable functional group, a cation site, an anion site, or a polymerizable functional group.

Note that one kind of these linking groups can be contained, or two or more kinds of these linking groups can be contained.

Specific examples of each of the 1st monomers encompass 2-(methacryloyloxy)ethyl-trimethylammonium chloride, 2-(acryloyloxy)ethyl-trimethylammonium chloride, and 3-(methacryloylamino)propyl-trimethylammonium chloride. Among the 1st monomers listed as examples, 3-(methacryloylamino)propyl-trimethylammonium chloride is preferable.

In the step (1) in the DN gel membrane production method in accordance with an embodiment of the present invention, a solution containing the ionic liquid A (1st monomers) and the ionic liquid B (such a solution is hereinafter also referred to as "cast liquid") is cast on a substrate. A method of casting the cast liquid on the substrate can be any method which is typical to a person skilled in the art. The method can be, for example, a method in which a casting knife is used.

The cast liquid can be prepared by dissolving, in the ionic liquid B as a solvent, a solute containing the ionic liquid A (1st monomers) and, as needed, a (photo)polymerization initiator, a crosslinking agent, and others (described later). In a case where the cast liquid is prepared, the solutes described above can be added simultaneously to the solvent or can be added sequentially to the solvent. In such cases, as necessary, it is possible to, for example, heat and/or stir the mixture of the solutes and the solvent.

A 1st monomer concentration in the cast liquid is preferably 0.5 mol/L to 5 mol/L and more preferably 1.5 mol/L to 3 mol/L.

Examples of the substrate encompass, but are not particularly limited to, a glass plate, a quartz plate, an acrylic plate, a Teflon (registered trademark) plate, and a fluorinated resin plate.

In addition, a gel, which is made of a polymer of the 1st monomers, can be formed by (i) forming a sacrificial layer on the substrate, (ii) casting the cast liquid on the sacrificial layer, (iii) forming a gel (made of a polymer of the 1st monomers) on the sacrificial layer by a polymerization method described later, and then (iv) dissolving the sacrificial layer with use of a solvent.

The solvent is not limited to any particular one, provided that (i) the solvent can melt the sacrificial layer and (ii) the solvent does not dissolve the substrate or the gel to be obtained. The solvent can be, for example, an organic solvent such as ethanol.

The sacrificial layer is not limited to any particular one, provided that the sacrificial layer has properties to be dissolved in a solvent. Examples of sacrificial layer encompass a poly(4-vinylphenol) (PVP) thin film layer, a polyvinyl alcohol (PVA) thin film layer, a gelatin thin film layer, a sodium alginate thin film layer, a calcium alginate thin film layer. The sacrificial layer can be a single layer, or can be a layer in which a plurality of layers are disposed.

The sacrificial layer has a thickness of preferably 5 µm to 500 µm and more preferably 50 µm to 100 µm. The thickness of the sacrificial layer is preferably not less than 5 µm because such a thickness allows the cast liquid to be cast uniformly. The thickness of the sacrificial layer is preferably not more than 500 µm because such a thickness makes it possible to shorten an amount of time it takes to remove (dissolve) the sacrificial layer later.

The sacrificial layer can be formed by, for example, (i) casting, on the substrate, a dissolve in which a substance(s) constituting the sacrificial layer is/are dissolved and then (ii) drying the solution. The sacrificial layer can be dissolved by, for example, immersing, in a solvent, the substrate on which the sacrificial layer has been formed.

In the step (1) in the DN gel membrane production method in accordance with an embodiment of the present invention, the 1st monomers are polymerized. The 1st monomers are polymerized by a typical polymerization method. Examples of the polymerization method encompass, but are not particularly limited to, (i) a photopolymerization method such as ultraviolet irradiation and (ii) a method in which the 1st monomers are heated in the presence of a polymerization initiator.

Examples of the polymerization initiator encompass, but are not particularly limited to, 2,2-azobisisobutyronitrile (AIBN), benzoyl peroxide, acetyl peroxide, lauryl peroxide, t-butyl peracetate, t-butyl peracetate and di-t-butyl peroxide in combination, t-butylhydroperoxide, benzoyl hydroperoxide, 2,4-dichlorobenzoyl peroxide, and isopropyl peroxycarbonate. A polymerization initiator concentration in the cast solution is preferably 0.001 mol/L to 0.01 mol/L and more preferably 0.003 mol/L to 0.006 mol/L.

In a case where a photopolymerization method is used in the step (1) in the DN gel membrane production method in accordance with an embodiment of the present invention, the cast liquid can contain a photopolymerization initiator. The photopolymerization initiator is not limited to any particular one, but can be, for example, a photopolymerization initiator which generates radicals in response to irradiation of ultraviolet light. Specific examples of the photopolymerization initiator encompass 2-oxoglutaric acid (OA), benzophenone, acetophenone benzyl, benzyl dimethyl ketone, benzoin, benzoin methyl ether, benzoin ethyl ether, benzoin isopropyl ether, dimethoxyacetophenone, dimethoxyphenyl acetophenone, diethoxyacetophenone, diphenyl disulfite, methyl o-benzoylbenzoate, 4-ethyl dimethylaminobenzoate, 2,4-diethyl thioxanthone, 2-methyl-1-[4-(methyl)phenyl]-2-morpholinopropanone-1, tetra(t-butylperoxycarbonyl)benzophenone, benzyl, 2-hydroxy-2-methyl-1-phenyl-propane-1-on, 4,4-bis(diethylamino)benzophenone, and 2,2'-bis(2-chlorophenyl)-4,5,4',5'-tetraphenyl-1,2'-biimidazole. A polymerization initiator concentration in the cast solution is preferably 0.001 mol/L to 0.01 mol/L and more preferably 0.003 mol/L to 0.006 mol/L.

Other than the components above, the cast liquid can further contain another component which can control polymerization of the 1st monomers. Examples of such a component encompass a chain transfer agent, a polymerization promoter, a pH adjuster. The chain transfer agent is, for example, alkyl mercaptan. The polymerization promoter is, for example, a Lewis acid compound. Examples of the pH adjuster encompass phosphoric acid, citric acid, tartaric acid, and lactic acid.

The cast liquid preferably further contains a crosslinking agent. Examples of the crosslinking agent encompass, but are not particularly limited to, N,N'-methylenebisacrylamide, N,N'-propylene-bis-acrylamide, di(acrylamidomethyl)ether, 1,2-diacrylamide ethylene glycol, 1,3-diacryloyl ethylene urea, ethylene diacrylate, N,N'-bisacrylic cystamine, triallyl cyanurate, and triallyl isocyanurate. While a crosslinking agent concentration in the cast liquid affects acid gas separation performance and mechanical strength, the crosslinking agent concentration in the cast liquid is preferably not more than 10.0 mol% and more preferably not more than 3.5 mol% in view of the acid gas separation performance. In view of the mechanical strength, the crosslinking agent concentration is preferably not less than 0.1 mol% and more preferably not less than 0.8 mol%. In a case where the crosslinking agent is contained in the cast liquid, it is possible to suitably polymerize the 1st monomers. It is preferable to polymerize the 1st monomers in the presence of the crosslinking agent because such polymerization makes it possible to prepare a polymer of the 1st monomers, which polymer can be suitably entangled with a polymer of 2nd monomers described later.

Suitable reaction conditions in the polymerization described above (e.g., reaction time, reaction temperature, and, in a case where light (ultraviolet) irradiation is carried out, wavelength of the light, irradiation time, and the like) vary depending on, for example, (i) the kind of 1st monomers to be used, (ii) a polymerization method, and (iii) the kind of a (photo)polymerization initiator. The suitable reaction conditions can be conditions typically known to a person skilled in the art.

In a case where the above-described polymerization is carried out in the step (1) in the DN gel membrane production method in accordance with an embodiment of the present invention, the 1st monomers are polymerized. This produces a 1st gel membrane. The 1st gel membrane is a gel of an ionic liquid. According to an embodiment of the present invention, the 1st gel membrane is a gel which includes, as a constituent element, a polymer of the 1st monomers. More specifically, the 1st gel membrane is a gel which has a network structure constructed by the polymer of the 1st monomers.

### [Step (2): Polymerization of 2nd monomers]

The step (2) in the DN gel membrane production method in accordance with an embodiment of the present invention is a step in which (i) the 1st gel (1st network gel) membrane produced in the step (1) is immersed in a solution containing the 2nd monomers and (ii) the 2nd monomers are polymerized in the 1st network gel, so that a DN gel membrane is produced, the DN gel membrane having a structure in which the polymers of the 1st monomers and the polymers of the 2nd monomers are entangled with each other.

The 2nd monomers are different from the 1st monomers. The 2nd monomers are preferably monomers which constitute a polymer having excellent flexibility because such 2nd monomers allow a highly tough three-dimensional structure to be formed by entangling polymers of the 2nd monomers with polymers of the 1st monomers. Examples of each of the 2nd monomers encompass, but are not particularly limited to, acrylamide and a derivative thereof, 2-hydroxyethyl methacrylate, 2-hydroxyethyl acrylate, hydroxypropyl acrylate, and vinylpyrrolidone. One kind of these 2nd monomers can be used, or two or more kinds of these 2nd monomers can be used.

Examples of the acrylamide and the derivative thereof encompass acrylamide, N,N-dimethylacrylamide, N-isopropyl acrylamide, N,N-diethylacrylamide, and N-hydroxyethyl acrylamide.

The 2nd monomers are preferably acrylamide or a derivative thereof, and more preferably N,N-dimethylacrylamide.

A 2nd monomer concentration in the solution containing the 2nd monomers is preferably 0.5 mol/L to 5 mol/L and more preferably 2 mol/L to 4 mol/L.

In the production method in accordance with an embodiment of the present invention, a ratio of the amount (number of moles) of the 2nd monomers added to the amount (number of moles) of the 1st monomers added (i.e. 2nd monomers/1st monomers) is preferably not less than 1, more preferably 1 to 80, and still more preferably 10 to 50. The ratio of the numbers of moles is preferably not less than 1 because, in such a case, polymers obtained from the 1st monomers and polymers obtained from the 2nd monomers can be suitably entangled with each other, so that it is possible to produce a DN gel membrane which is highly tough and which has excellent durability and excellent formability.

In the step (2) in the DN gel membrane production method in accordance with an embodiment of the present invention, a solvent of the solution containing the 2nd monomers encompass is not limited to any particular one. Examples of the solvent encompass water, methanol, and ethanol. Among these, water is particularly preferable.

For the purpose of controlling the polymerization of the 2nd monomers, the solution containing the 2nd monomers can further contain another component(s) identical to the above-described another component(s) contained in the cast liquid of the step (1).

The solution containing the 2nd monomers preferably further contains a swelling suppressing agent. In a case where the swelling suppressing agent is contained, the 1st network gel is prevented from excessively swelling, so that it is possible to suitably entangle polymers of the 1st monomers with polymers of the 2nd monomers. This allows a DN gel membrane having higher toughness to be produced. Examples of the swelling suppressing agent encompass NaCl, KCl, CsCl, and RuCl.

In the step (2) in the DN gel membrane production method in accordance with an embodiment of the present invention, the 2nd monomers are polymerized while the 1st network gel is immersed in the solution containing the 2nd monomers. As in the method of polymerizing the 1st monomers in the step (1), the 2nd monomers are polymerized by a typical polymerization method. Examples of the polymerization method encompass (i) a photopolymerization method such as ultraviolet irradiation and (ii) a method in which the 2nd monomers are heated in the presence of a polymerization initiator.

The photopolymerization initiator and the polymerization initiator to be used in the photopolymerization method can each be a (photo)polymerization initiator similar to those listed in the polymerization method in the step (1).

The solution containing the 2nd monomers can contain a crosslinking agent which can be contained in the cast liquid in the step (1).

Furthermore, as in the polymerization method in the step (1), suitable reaction conditions in the polymerization described above (e.g., reaction time, reaction temperature, and, in a case where light (ultraviolet) irradiation is carried out, wavelength of the light, irradiation time, and the like) vary depending on, for example, (i) the kind of 2nd monomers to be used, (ii) a polymerization method, and (iii) the kind of a (photo)polymerization initiator. The suitable reaction conditions can be conditions typically known to a person skilled in the art.

### [DN gel membrane]

A DN gel membrane to be obtained in the step (2) in the DN gel membrane production method in accordance with an embodiment of the present invention has a three-dimensional structure in which a network structure constructed by the polymers of the 1st monomers (such a network structure is hereinafter also referred to as "1st network") and a network structure constructed by the polymers of the 2nd monomers (such a network structure is hereinafter also referred to as "2nd network") are entangled with each other. Since the DN gel membrane has the three-dimensional structure, the DN gel membrane is highly tough and has excellent durability and excellent formability.

The DN gel membrane can contain the solvent which was used in the steps (1) and (2). A solvent content is preferably 30% by weight to 95% by weight and more preferably 70% by weight to 90% by weight, relative to a weight of the entire DN gel membrane (100% by weight). The solvent content is preferably not less than 30% by weight in that the DN gel membrane can have high diffusivity. The solvent content is preferably not more than 95% by weight in that the DN gel membrane can have increased toughness.

Examples of the strength (toughness) of the DN gel membrane encompass tensile fracture resistance and indentation fracture resistance. These fracture resistances can be measured by methods described below.

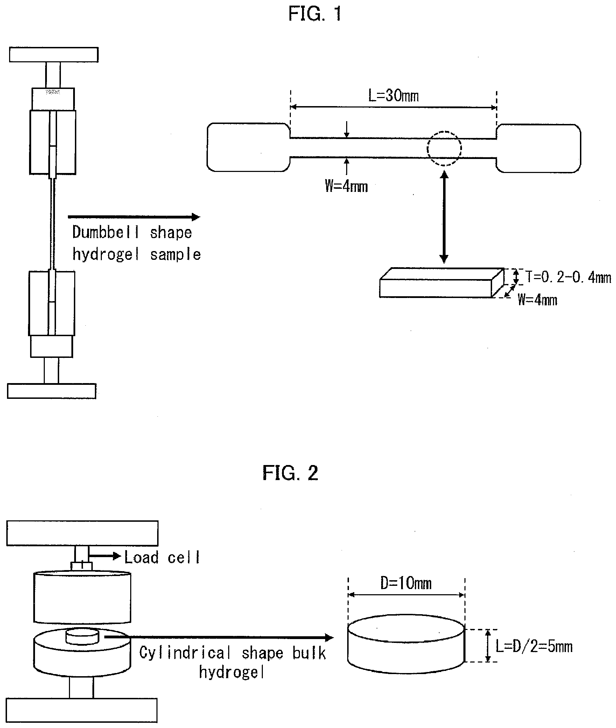

The tensile fracture resistance can be measured with use of an automatic recording universal testing device (such as "Autograph AGS-X" manufactured by Shimadzu Corporation). For example, a dumbbell-shaped DN gel membrane sample having a width of 4 mm, a thickness of 0.2 mm to 0.4 mm, and a length of 30 mm is prepared. Then, the dumbbell-shaped sample is fixed between clamps of the automatic recording universal testing device. Then, a load adjusted to various values is applied to the dumbbell-shaped sample at a rate of 30 mm/min until the sample is destroyed. By measuring the stress when the sample is destroyed, it is possible to measure the tensile fracture resistance (see Fig. 1).

Likewise, the indentation fracture resistance can also be measured with use of an automatic recording universal testing device (such as "Autograph AGS-X" manufactured by Shimadzu Corporation). For example, a cylindrical DN gel membrane sample having a diameter of 10 mm and a height of 5 mm (1/2 of diameter) is prepared, and is then placed between two plates. Note that an upper plate of the two plates is connected to a load cell. Then, the upper plate is pressed against the cylindrical sample at a rate of 0.5 mm/min until the sample is destroyed. By measuring the stress when the sample is destroyed, it is possible to measure the indentation fracture resistance (see Fig. 2).

The tensile fracture resistance of the DN gel membrane is preferably not less than 400 kPa. The indentation fracture resistance of the DN gel is also preferably not less than 0.5 MPa and more preferably not less than 1 MPa. A tensile fracture resistance of not less than 400 kPa and an indentation fracture resistance of not less than 0.5 MPa are preferable because, in such a case, it is possible to improve the durability and the formability of the DN gel membrane.

Since the DN gel membrane is excellent in both toughness and diffusivity, the DN gel membrane can be put to various applications such as a gas separation membrane, an actuator, and a gas absorber. The gas separation membrane is, for example, a CO₂ separation membrane. The gas absorber is, for example, a CO₂ gas absorber.

### [Embodiment 2: Method of producing acid gas separation membrane]

An acid gas separation membrane production method in accordance with Embodiment 2 of the present invention includes the following steps (1) through (3).
a step (1) including producing a 1st gel membrane by (i) casting, on a substrate, a solution containing an ionic liquid A and an ionic liquid B, the ionic liquid A being made up of 1st monomers each of which is a molecule having at least one polymerizable functional group and (ii) polymerizing the 1st monomers;
a step (2) including producing the DN gel membrane by (i) immersing the 1st gel membrane in a solution containing 2nd monomers which are different from the 1st monomers and (ii) polymerizing the 2nd monomers; and
a step (3) including producing the acid gas separation membrane by immersing the DN gel membrane in a solution which contains an ionic liquid C containing a group that reacts with an acid gas.

Examples of the "acid gas" in accordance with an embodiment of the present invention encompass CO₂, nitrogen oxide, sulfur oxide, hydrogen sulfide, carbonyl sulfide, and hydrogen halide. That is, examples of the acid gas separation membrane in accordance with an embodiment of the present invention encompass a CO₂ separation membrane, a nitrogen oxide separation membrane, a sulfur oxide separation membrane, a hydrogen sulfide separation membrane, a carbonyl sulfide separation membrane, and a hydrogen halide separation membrane.

The steps (1) and (2) in the acid gas separation membrane production method in accordance with Embodiment 2 of the present invention are similar to the steps (1) and (2) in the DN gel membrane production method in accordance with Embodiment 1 of the present invention. The description of the steps (1) and (2) in the method of producing the acid gas separation membrane will therefore be omitted.

The DN gel membrane to be obtained in the step (2) in the acid gas separation membrane production method in accordance with an embodiment of the present invention is similar to a DN gel membrane produced in the DN gel membrane production method in accordance with Embodiment 1 of the present invention.

In the step (3) in the acid gas separation membrane production method in accordance with an embodiment of the present invention is a step in which (i) the DN gel membrane is immersed in the solution which contains the ionic liquid C containing the group that reacts with the acid gas, so that a liquid component (solvent in the steps (1) and (2)) contained in the DN gel membrane is substituted by the solution containing the ionic liquid C, and, consequently, the DN gel membrane which contains the ionic liquid C containing the group that reacts with an acid gas (that is, the acid gas separation membrane) is produced.

The ionic liquid C in the step (3) is not limited to any particular one, provided that the ionic liquid C contains a group that reacts with an acid gas. In a case where a separation membrane for separating CO₂ as the acid gas is to be produced, examples of the ionic liquid C encompass [triethyl(2-methoxymethyl)phosphonium][2-cyanopyrrolido] ([P222(1O1)][2-CNpyr]), [triethyl(2-methoxymethyl)phosphonium][pyrazolide] ([P222(1O1)][Pyr]),[triethyl(2-methoxymethyl)phosphonium] [imidazolide] ([P22](1O1)][Im]), and [triethyl(2-methoxymethyl)phosphonium][indazolide] ([P222(101)][Inda]), each of which include a methoxy group.

An ionic liquid C concentration in the solution containing the ionic liquid C is preferably 10% by weight to 95% by weight and more preferably 20% by weight to 80% by weight, relative to a weight of the entire solution.

A solvent in the solution containing the ionic liquid C in the step (3) is not limited to any particular one. Examples of the solvent encompass water, methanol, and ethanol.

In a case where the DN gel membrane is immersed in the solution containing the ionic liquid C in the step (3), conditions (immersion time, immersion temperature, and the like) may vary depending on (i) the kind of the ionic liquid C used, the ionic liquid C concentration, and (iii) the form of the DN gel membrane used. The immersion time is, for example, preferably 12 hours to 48 hours. The immersion temperature is, for example, preferably 20°C to 50°C.

After the DN gel membrane is immersed in the solution containing the ionic liquid C, the acid gas separation membrane production method in accordance with an embodiment of the present invention can include a step in which a resultant gel membrane is dried. Drying conditions in the step (drying step) in which the gel membrane is dried are not particularly limited, provided that the ionic liquid C does not leave from the resultant gel membrane. For example, it is possible to employ a method in which (i) the gel membrane is dried while standing still at room temperature for several hours (e.g., 3 hours) and then (ii) the resultant gel membrane is dried under reduced pressure for 8 hours in a depressurized oven at 100°C.

An amount of the ionic liquid C contained in the acid gas separation membrane produced in the acid gas separation membrane production method in accordance with an embodiment of the present invention is preferably 10% by weight to 90% by weight, more preferably 30% by weight to 90% by weight, and still more preferably 60% by weight to 85% by weight, relative to a weight of the entire acid gas separation membrane. The ionic liquid C is contained in the acid gas separation membrane preferably in an amount of not less than 10% by weight in view of improving an acid gas separation performance of the acid gas separation membrane. The ionic liquid C is contained in the acid gas separation membrane preferably in an amount of not more than 90% by weight in view of improving strength of the acid gas separation membrane.

An acid gas separation membrane produced by the acid gas separation membrane production method in accordance with an embodiment of the present invention has excellent toughness, excellent durability, and excellent formability, as is the case of the DN gel membrane which is the base material of the acid gas separation membrane. In addition, the ionic liquid C contained in the acid gas separation membrane is more diffused. Therefore, such an effect is produced that the acid gas separation membrane is highly strong and has high acid gas-selective permeability.

The present invention is not limited to the embodiments, but can be altered by a skilled person in the art within the scope of the claims. The present invention also encompasses, in its technical scope, any embodiment derived by combining technical means disclosed in differing embodiments.

### [Examples]

### [Example 1]

### [Preparation of DN gel membrane]

### [Preparation of 1st network gel forming cast liquid]

A 1st network gel forming cast liquid 1 was prepared by dissolving the following three in 1-ethyl-3-methylimidazolium tetrafluoroboric acid ([Emim][BF4]) (manufactured by Sigma-Aldrich Co.) as a solvent: (i) 3-(methacryloylamino)propyl-trimethylammonium chloride (MAPTAC) (manufactured by Sigma-Aldrich Co.) as 1st monomers, (ii) 2-oxoglutaric acid (OA) (manufactured by Tokyo Chemical Industry Co., Ltd.) as a photopolymerization initiator, and (iii) N,N'-methylenebisacrylamide (MBAA) (manufactured by Sigma-Aldrich Co.) as a crosslinking agent. Table 1 shows the composition of the 1st network gel forming cast liquid 1, that is, the respective amounts of the 1st monomers, the photopolymerization initiator, the crosslinking agent, and the solvent which were used.

### [Table 1]

**Table 1 Composition of 1st network gel forming cast liquid 1**

| Name of chemical agent | Amount used |
|---|---|
| MAPTAC | 2.0470 g (3 mol/L) |
| [Emim][BF₄] | 4 g |
| MBAA | 0.0858 g (6 mol/%) |
| OA | 0.0027 g |

### [Preparation of 1st network gel membrane]

A PVP ethanol solution was prepared by dissolving 100 mg of poly(4-vinylphenol) (PVP) (manufactured by Sigma-Aldrich Co., weight-average molecular weight: 11000) in 5 mL of ethanol. With use of a casting knife, the PVP ethanol solution was cast (spread) on a glass plate (manufactured by Tokyo Glass Kikai KK) so that a casting thickness would be 100 µm, and was then dried while standing still for 5 minutes at room temperature. This produced a PVP thin layer on the glass plate.

Then, an aqueous PVA solution was prepared by dissolving 25 mg of polyvinyl alcohol (PVA) (manufactured by Sigma-Aldrich Co., weight-average molecular weight: 89000 to 98000) in 5 mL of water. With use of a casting knife, the aqueous PVA solution was cast on the PVP thin layer so that a casting thickness would be 100 µm, and was then dried while standing still overnight at room temperature. This produced a sacrificial layer (PVA layer) on the glass plate.

With use of a casting knife, the 1st network gel forming cast liquid 1 was cast on the sacrificial layer so that a casting thickness would be 200 µm. Then, in a glove box in which an atmosphere was adjusted to N₂ atmosphere, the 1st network gel forming cast liquid 1 was irradiated with ultraviolet light (wavelength: 365 nm) for 12 hours, so that radical polymerization of the MAPTAC was carried out. This produced a laminated body in which the 1st network gel membrane (1st gel membrane) was formed on the sacrificial layer. The laminated body thus obtained was immersed in ethanol for 2 hours, so that the sacrificial layer was dissolved. This produced a 1st network gel membrane 1.

### [Preparation of DN gel membrane]

A 2nd network gel forming aqueous solution 1 was prepared by dissolving the following three in water: (i) N,N-dimethylacrylamide (DMAAm) (manufactured by Tokyo Chemical Industry Co., Ltd.) as monomers (2nd monomers) for forming a 2nd network gel, (ii) OA as a photopolymerization initiator, and (iii) NaCl as a swelling suppressing agent. The 1st network gel membrane 1 was immersed in the 2nd network gel forming aqueous solution 1 for 12 hours, so that a poly (MAPTAC) network in the 1st network gel membrane 1 was swollen. That is, the 1st network gel was swollen. Then, the gel membrane was sandwiched between glass plates, and was irradiated with ultraviolet light (wavelength: 365nm) for 8 hours (ultraviolet irradiation), so that dimethylacrylamide was polymerized. This formed a 2nd network gel in the 1st network gel membrane 1, so that a double-network gel membrane (DN gel membrane), in which the 1st network gel and the 2nd network gel were entangled with each other, was prepared. Table 2 shows the composition of the 2nd network gel forming aqueous solution 1, that is, the respective amounts of the 2nd monomers, the photopolymerization initiator, the swelling suppressing agent, and the solvent (water) which were used.

The ultraviolet irradiation was carried out with use of a commercially available ultraviolet irradiation device (manufactured by AS ONE Corporation, product name: LUV-16).

### [Table 2]

**Table 2 Composition of 2nd network gel forming aqueous solution 1**

| Name of chemical agent | Amount used |
|---|---|
| DMAAm | 39.6 g (4 mol/L) |
| Water (H₂O) | 100 g |
| NaCl | 2.9220 g (0.5 mol/L) |
| OA | 0.0584 g |

### [Examples 2 through 6]

DN gel membranes were produced as in Example 1 except that the MBAA were used in amounts shown in the following Table 3. Note that 1st network gel forming cast liquids used in Examples 2 through 6 will be referred to as 1st network gel forming cast liquids 2 through 6, respectively.

**[Table 3]**

| | Example 2 | Example 3 | Example 4 | Example 5 | Example 6 |
|---|---|---|---|---|---|
| MBAA | 0.0572 g (4 mol%) | 0.0429 g (3 mol%) | 0.0286 g (2 mol%) | 0.0143 g (1 mol%) | 0.00715 g (0.5 mol%) |

### [Example 7]

A DN gel membrane was produced as in Example 2 except that, with use of a casting knife, the 1st network gel forming cast liquid 2 was cast on the sacrificial layer so that a casting thickness would be 80 µm.

### [Example 8]

A DN gel membrane was produced as in Example 4 except that, with use of a casting knife, the 1st network gel forming cast liquid 4 was cast on the sacrificial layer so that a casting thickness would be 80 µm.

### [Example 9]

A DN gel membrane was produced as in Example 5 except that, with use of a casting knife, the 1st network gel forming cast liquid 5 was cast on the sacrificial layer so that a casting thickness would be 80 µm.

### [Example 10]

A DN gel membrane was produced as in Example 6 except that, with use of a casting knife, the 1st network gel forming cast liquid 6 was cast on the sacrificial layer so that a casting thickness would be 80 µm.

### [Example 11]

A cylindrical syringe having a diameter of 10 mm and a height of 5 mm (1/2 of the diameter) was filled with a 1st network gel forming liquid shown in Table 4, and the 1st network gel forming liquid was irradiated with ultraviolet light (wavelength: 365nm) for 6 hours. Then, the resultant 1st network gel was immersed in a 2nd network gel forming liquid shown in Table 5 for 24 hours, and was then irradiated with ultraviolet light (wavelength: 365 nm) for 8 hours. This produced a cylindrical DN bulk gel. Note that the 1st network gel forming liquid used in Example 11 is referred to as "1st network gel forming liquid 11", and the 2nd network gel forming liquid used in Example 11 is referred to as "2nd network gel forming liquid 11".

**[Table 4]**

| Name of chemical agent | Amount used |
|---|---|
| [Emin] [BF₄] | 4 g |
| MPTC | 1.0235 g (1.5 mol/L) |
| MBAA | 0.0428 g |
| OA | 0.00135 g |

**[Table 5]**

| Name of chemical agent | Amount used |
|---|---|
| DMAAm | 39.6 g (4 mol/L) |
| Water (H₂O) | 100 g |
| OA | 0.0584 g |

### [Measurement of tensile fracture resistance of DN gel membrane]

From each of the DN gel membranes produced in Examples 1 through 6, a dumbbell-shaped piece having a width of 4 mm, a thickness of 0.2 mm to 0.4 mm, and a length of 30 mm was punched out. This produced a DN gel membrane sample. The dumbbell-shaped sample was fixed between clamps of an automatic recording universal testing device ("Autograph AGS-X" manufactured by Shimadzu Corporation). Then, a load adjusted to various values was applied to the dumbbell-shaped sample at a rate of 30 mm/min until the sample was destroyed, and the stress when the sample was destroyed was measured. The measurement of the sample was repeated a plurality of times, and an average of the values obtained by the measurement was used as a measured value of the tensile fracture resistance.

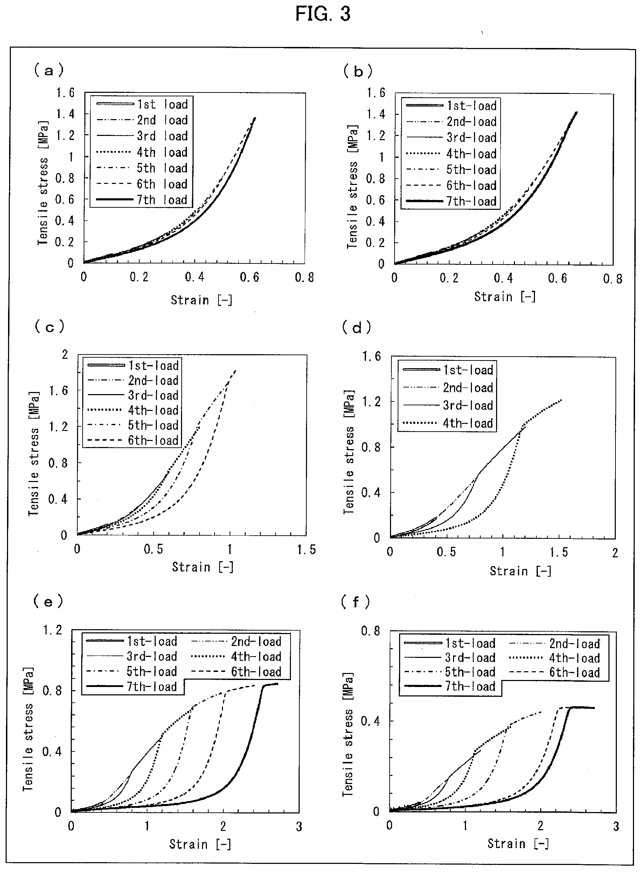

The sample obtained from the DN gel membrane produced in each of Examples 1, 2, 5, and 6 was measured 7 times. The results are shown in (a), (b), (e), and (f) of Fig. 3. The sample obtained from the DN gel membrane produced in Example 4 was measured 6 times. The results are shown in (c) of Fig. 3. The sample obtained from the DN gel membrane produced in Example 5 was measured 4 times. The results are shown in (d) of Fig. 3.

Table 6 shows the respective tensile fracture resistances of the DN gel membranes obtained in Examples 1 through 6, which were thus obtained by the measurement. In Table 6, tensile fracture resistances, which were of the samples obtained from the DN gel membranes produced in Examples 1 through 6, are shown in the columns of Examples 1 through 6, respectively.

**[Table 6]**

| | Example 1 | Example 2 | Example 3 | Example 4 | Example 5 | Example 6 |
|---|---|---|---|---|---|---|
| Tensile fracture resistance (kPa) | 1361 | 1421 | 1845 | 1224 | 847 | 464 |

### [Measurement of indentation fracture resistance of DN gel]

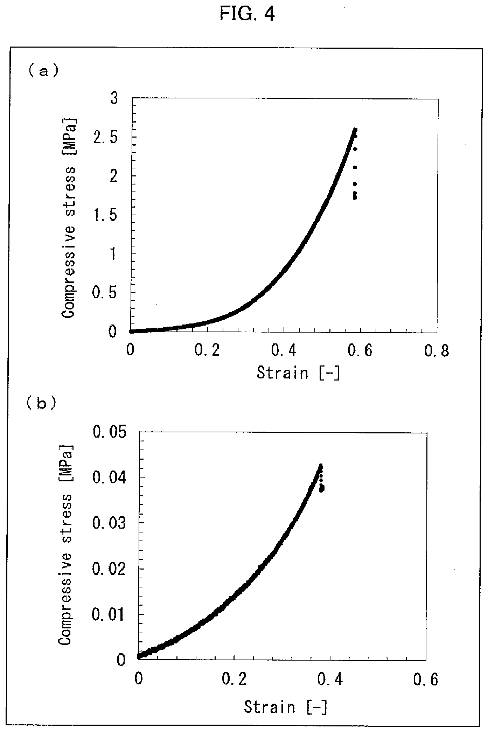

The cylindrical DN bulk gel produced in Example 11 was placed between two plates. An upper plate of the two plates was connected to a load cell. Then, the upper plate was pressed against the cylindrical sample at a rate of 0.5 mm/min until the sample was destroyed. The stress when the sample was destroyed was measured, and the measured value thus obtained was used as an indentation fracture resistance. The results of the measurement are shown in (a) of Fig. 4. The indentation fracture resistance of the DN gel obtained by the method above was 2.6 MPa.

### [Reference Example]

A sample of a cylindrical DN gel, which sample had a diameter of 10 mm and a height of 5 mm (1/2 of the diameter), was produced by a method similar to the above-described method of measuring an indentation fracture resistance, except that no 2nd network gel forming liquid was used as a raw material. In addition, with use of the cylindrical sample, an indentation fracture resistance was measured by the above-described method. The results of the measurement are shown in (b) of Fig. 4. The indentation fracture resistance of the DN gel obtained in Reference Example was 0.043 MPa.

### [Conclusion]

The results revealed that with a production method in accordance with an embodiment of the present invention, it is possible to produce a DN gel membrane which is highly tough and has excellent durability and excellent formability.

### [Example 12]

### [Preparation of CO₂ separation membrane]

A [P222(101)][Inda] solution ([P222(101)][Inda] accounting for 50% by weight) was prepared by dissolving [triethyl(2-methoxymethyl)phosphonium] [indazolide] ([P222(101)][Inda]) in ethanol. The DN gel membrane prepared in Example 5 was immersed in the [P222(101)][Inda] solution for 24 hours, and was then dried while standing still for 3 hours at room temperature. Then, the resultant gel membrane was dried under reduced prepare for 8 hours in a depressurized oven at 100°C. This produced a DN gel CO₂ separation membrane.

### [Example 13]

A DN gel CO₂ separation membrane was prepared as in Example 12 except that (i) the DN gel membrane obtained in Example 7 was used and (ii) a [P222(101)][Inda] solution concentration was set to 80% by weight.

### [Example 14]

A DN gel CO₂ separation membrane was prepared as in Example 13 except that the DN gel membrane obtained in Example 8 was used.

### [Example 15]

A DN gel CO₂ separation membrane was prepared as in Example 13 except that the DN gel membrane obtained in Example 9 was used.

### [Example 16]

A DN gel CO₂ separation membrane was prepared as in Example 13 except that the DN gel membrane obtained in Example 10 was used.

### [Example 17]

A DN gel CO₂ separation membrane was prepared as in Example 16 except that a [P222(101)][Inda] solution concentration was set to 39% by weight.

### [Example 18]

A DN gel CO₂ separation membrane was prepared as in Example 16 except that a [P222(101)][Inda] solution concentration was set to 19% by weight.

### [Example 19]

A DN gel CO₂ separation membrane was prepared as in Example 16 except that a [P222(101)][Inda] solution concentration was set to 18% by weight.

### [Evaluation of CO₂ separation membrane]

The following method was used to evaluate the following three of the DN gel CO₂ separation membranes obtained in Examples 12 through 19: (i) CO₂/N₂ selectivity, (ii) a CO₂ permeation speed, and (iii) an N₂ permeation speed.

### <Evaluation method 1>

Each of the DN gel CO₂ separation membranes obtained in Examples 12 through 19 was set in a stainless steel cell having inlets and outlets for gases. Then, the cell was placed in an oven to which a thermostat was attached. Pipes for source material gases were connected to respective joint parts at the inlet and outlet for the source material gas. Pipes for a sweep gas were connected to respective joint parts at the inlet and outlet for the sweep gas. CO₂ and N₂ as source material gases were supplied to the cell at room temperature (normal temperature) by controlling, with use of a mass flow controller, a flow rate so that (i) a total flow was 200 mL/min and (ii) a CO₂ partial pressure was 2.5 kPa. The flow rate was maintained so that a difference (ΔP) between a pressure at a source material gas feed-side of the CO₂ separation membrane and a pressure at a source material gas permeate-side of the CO₂ separation membrane was 0. Meanwhile, He as a sweep gas was supplied to the cell at room temperature (normal temperature) by controlling a flow rate to be 40 mL/min with use of a mass flow controller. A pressure at a sweep gas side was maintained at an atmospheric pressure. Note that before the source material gases and the sweep gas were supplied to the cell, the temperatures of the source material gases and the sweep gas were raised by a heater to a temperature 50°C higher than a target temperature. Then, the source material gases and the sweep gas were guided through a 1-m coiled channel in the oven, so that the temperatures became the target temperature (100°C).

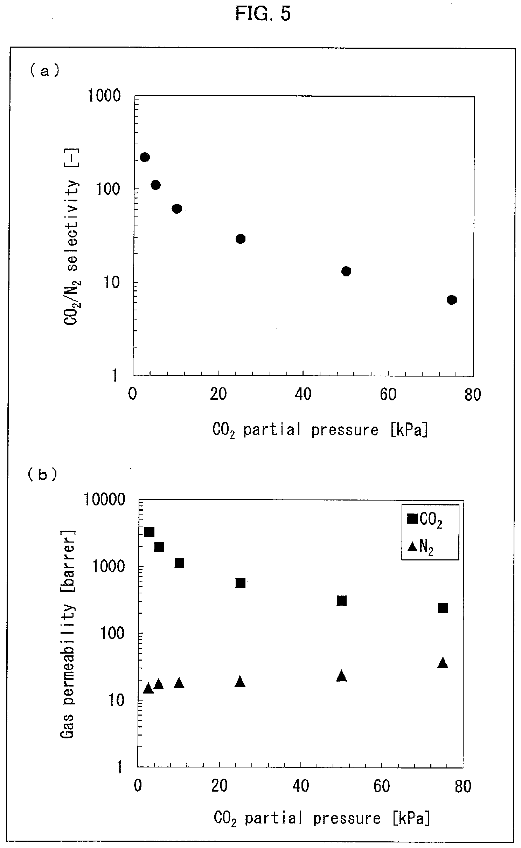

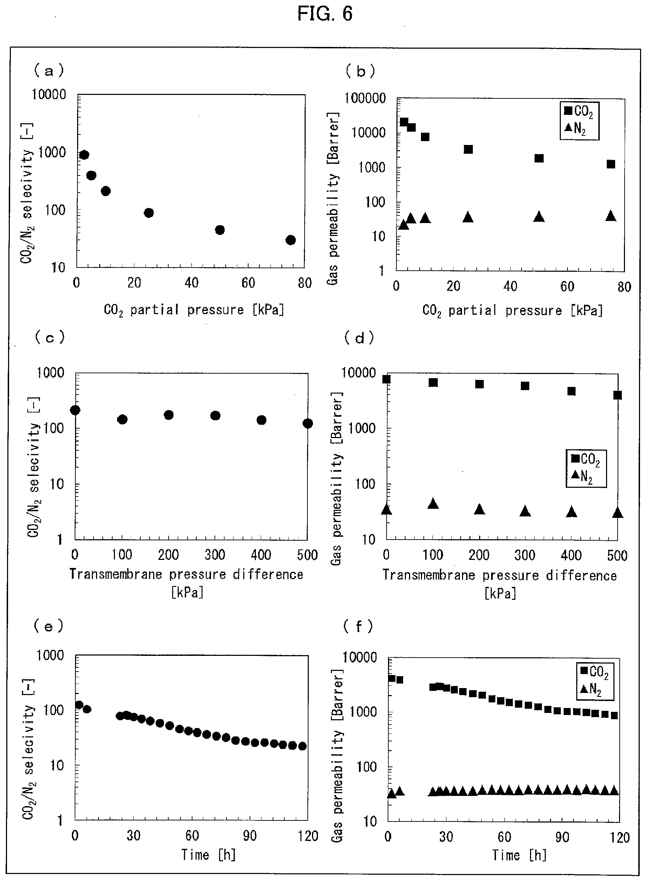

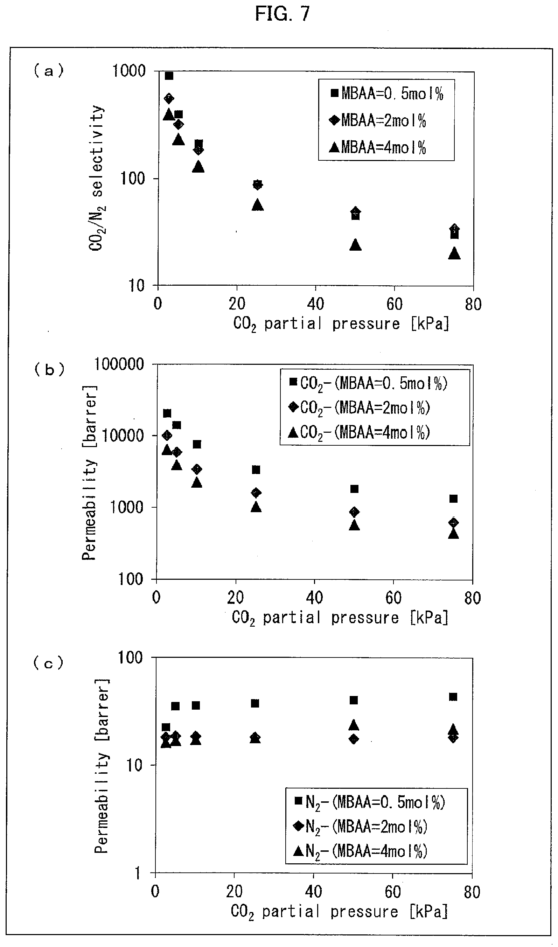

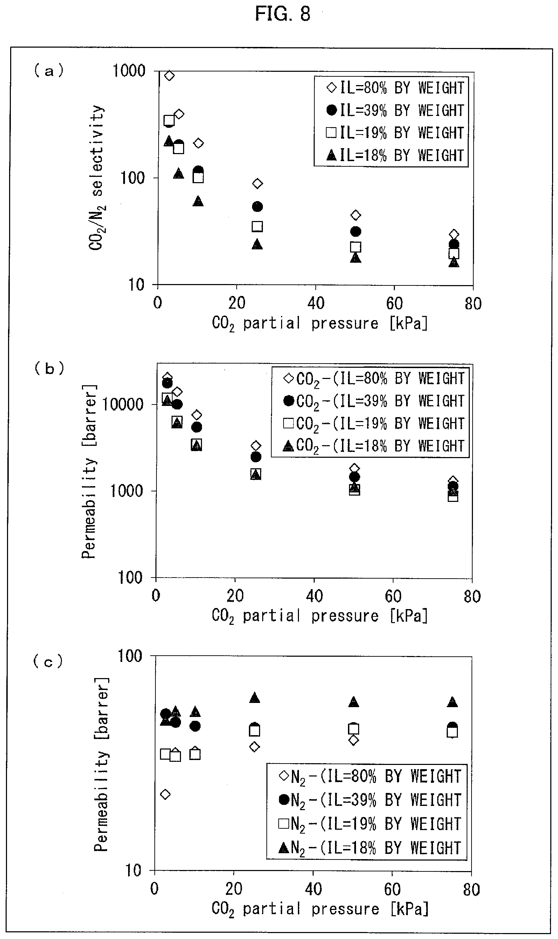

The temperature of the oven was set to 100°C which was a target temperature, and the temperatures of the source material gases and the sweep gas started to be raised. 3 hours after the temperatures started to be raised, the source material gases and the sweep gas were allowed to continue flowing until the temperatures reached a steady state. Then, the gas discharged from the sweep gas outlet side was analyzed with use of a gas chromatograph. Based on the results of the analysis, CO₂/N₂ selectivity and permeability coefficients of CO₂ and N₂ were calculated. When a fluctuation in a peak area, which was obtained as a result of the analysis, fell within 1%, it was determined that gas permeation became steady. Furthermore, analyses were likewise performed except that the CO₂ flow rate was changed so that CO₂ partial pressure would be 5 kPa, 10 kPa, 25 kPa, 50 kPa, and 75 kPa. The calculated CO₂/N₂ selectivity and the calculated permeability coefficients of CO₂ and N₂ are shown in Figs. 5, 6, 7, and 8. The results of the CO₂/N₂ selectivity of the DN gel CO₂ separation membrane obtained in Example 12 are shown in (a) of Fig. 5. The results of the permeability coefficients of CO₂ and N₂ of the DN gel CO₂ separation membrane obtained in Example 12 are shown in (b) of Fig. 5. The results of the CO₂/N₂ selectivity of the DN gel CO₂ separation membrane obtained in Example 16 are shown in (a) of Fig. 6. The results of the permeability coefficients of CO₂ and N₂ of the DN gel CO₂ separation membrane obtained in Example 16 are shown in (b) of Fig. 6. The results of the CO₂/N₂ selectivity of the DN gel CO₂ separation membranes obtained in Examples 13 through 15 are shown in (a) of Fig. 7. The results of the permeability coefficients of CO₂ and N₂ of the DN gel CO₂ separation membrane obtained in Examples 13 through 15 are shown in (b) and (c) of Fig. 7. The results of the CO₂/N₂ selectivity of the DN gel CO₂ separation membranes obtained in Examples 16 through 19 are shown in (a) of Fig. 8. The results of the permeability coefficients of CO₂ and N₂ of the DN gel CO₂ separation membrane obtained in Examples 16 through 19 are shown in (b) and (c) of Fig. 8.

### <Evaluation method 2>

Analyses were performed as with the evaluation method 1 except that (i) the DN gel CO₂ separation membrane obtained in Example 16 was set in a stainless steel cell having inlets and outlets for gases, (ii) the CO₂ flow rate was maintained so that the CO₂ partial pressure was 10 kPa, and (iii) the ΔP was sequentially changed to 0 kPa, 100 kPa, 200 kPa, 300 kPa, 400 kPa, and 500 kPa. The calculated CO₂/N₂ selectivity and the calculated permeability coefficients of CO₂ and N₂ are shown in (c) of Fig. 6 and (d) of Fig. 6, respectively.

### <Evaluation method 3>

Analyses were performed as with the evaluation method 1 except that (i) the DN gel CO₂ separation membrane obtained in Example 16 was set in a stainless steel cell having inlets and outlets for gases, (ii) the CO₂ flow rate was maintained so that the CO₂ partial pressure was 10 kPa, (iii) a pressure at a source material gas feed-side of the CO₂ separation membrane was set to 600 kPaA, and (iv) a pressure at a source material gas permeate-side was set to an atmospheric pressure. Note that the analyses were sequentially performed from immediately after the test was started until 115 hours passed since the test was started. The calculated CO₂/N₂ selectivity and the calculated permeability coefficients of CO₂ and N₂ are shown in (e) of Fig. 6 and (f) of Fig. 6, respectively.

### [Conclusion]

The results of the above measurement (see Figs. 5, 6, 7, and 8) revealed that, with the DN gel CO₂ separation membrane which is an acid gas separation membrane in accordance with an embodiment of the present invention, CO₂ is selectively separated even under conditions in which a partial pressure of CO₂ is high.

It was therefore found that a CO₂ separation membrane produced by the production method in accordance with an embodiment of the present invention has excellent CO₂ separation performance.

### [Comparative Example 1]

An operation was performed as in Example 1 except that the solvent of the 1st network gel forming cast liquid 1 of Example 1 was replaced with water. As a result, no DN gel membrane was obtained.

### [Conclusion]

A comparison between the results of Example 1 and the results of Comparative Example 1 revealed that unlike a conventional production method in which a volatile solvent (e.g., water) is used as a solvent for a 1st network gel forming cast liquid, a DN gel membrane production method in accordance with an embodiment of the present invention, in which a solvent of a 1 st network gel forming cast liquid and 1 st monomers are both nonvolatile, allows a DN gel membrane to be suitably prepared even in a case where a cast method is used, which cast method is suitable for continuous-type production which is suitable for industrial mass production.

### Industrial Applicability

A DN gel membrane production method in accordance with an embodiment of the present invention allows a cast method, which is an open system production method, to be utilized. This allows the DN gel membrane production method to be applied to continuous-type production which is suitable for industrial mass production. In addition, the DN gel membrane production method in accordance with an embodiment of the present invention can be suitably used for industrial production of various products using DN gel membranes, such as gas separation membranes, actuators, and gas absorbers.

## Claims

1. A method of producing a DN gel membrane, comprising:
a step (1) comprising producing a 1 st gel membrane by (i) casting, on a substrate, a solution containing an ionic liquid A and an ionic liquid B, the ionic liquid A being made up of 1 st monomers each of which is a molecule having at least one polymerizable functional group and (ii) polymerizing the 1 st monomers; and
a step (2) comprising producing the DN gel membrane by (i) immersing, in a solution containing 2nd monomers which are different from the 1 st monomers, the ionogel membrane obtained in the step (1) and (ii) polymerizing the 2nd monomers.

2. The method as set forth in claim 1, wherein
the ionic liquid B in the step (1) contains anions of at least one kind selected from the group consisting of tetrafluoroboric acid ion, BF₃CF₃⁻, BF₃C₂F₅⁻, BF₃C₃F₇⁻, BF₃C₄F₉⁻, hexafluorophosphoric acid ion, bis(trifluoromethanesulfonyl)imide ion, bis(fluoromethanesulfonyl)imide ion, bis(pentafluoroethanesulfonyl)imide ion, perchloric acid ion, tris(trifluoromethanesulfonyl)carbon acid ion, trifluoromethanesulfonic acid ion, dicyanamido ion, trifluoroacetic acid ion, organic carboxylic acid ion, halide ion, and hydroxide ion.

3. The method as set forth in claim 1 or 2, wherein
the ionic liquid B in the step (1) contains cations of at least one kind selected from the group consisting of cations represented by the following Formulas (I) through (IV): 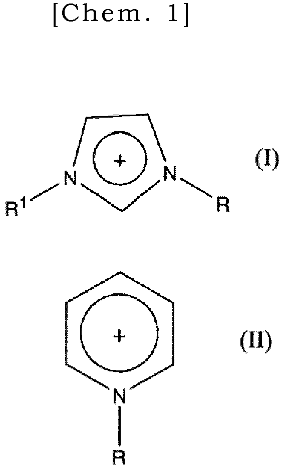
[NRₓH₄₋ₓ]⁺ (III)
[PRₓH₄₋ₓ]⁺ (IV)
where (i) R and R¹ each represent a linear or branched C1-C16 alkyl group or a hydrogen atom, the alkyl group containing at least one methylene group which can be substituted by an oxygen atom and (ii) in each of Formulas (III) and (IV), x represents an integer of 1 to 4.

4. The method as set forth in any one of claims 1 through 3, wherein
the 1 st monomers contain at least one kind selected from the group consisting of an anion site and an anion; and
the anion site is of at least one kind selected from the group consisting of *-BF₃⁻, *-CF₂BF₃⁻, *-C₂F₄BF₃⁻, *-C₃F₆BF₃⁻, *-C₄F₈BF₃⁻, *-PF₅⁻, *-CF₂SO₂N⁻(CF₃SO₂), *-CF₂SO₂C⁻ (CF₃SO₂)₂, *-CF₂SO₃⁻, *-CF₂COO⁻, and *-R^{b}COO⁻ (where (i) R^{b} represents a C1-C4 alkylene group, a phenylene group, or a naphthylene group and (ii) "*" represents a point at which the anion site binds to another group), and the anion is of at least one kind selected from the group consisting of tetrafluoroboric acid ion, BF₃CF₃⁻, BF₃C₂F₅⁻, BF₃C₃F₇⁻, BF₃C₄F₉⁻, hexafluorophosphoric acid ion, bis(trifluoromethanesulfonyl)imide ion, bis(fluoromethanesulfonyl)imide ion, bis(pentafluoroethanesulfonyl)imide ion, perchloric acid ion, tris(trifluoromethanesulfonyl)carbon acid ion, trifluoromethanesulfonic acid ion, dicyanamido ion, trifluoroacetic acid ion, organic carboxylic acid ion, halide ion, and hydroxide ion.

5. The method as set forth in any one of claims 1 through 4, wherein
the 1st monomers contain cation sites of at least one kind selected from the group consisting of cation sites represented by the following Formulas (Ia) through (IVa): 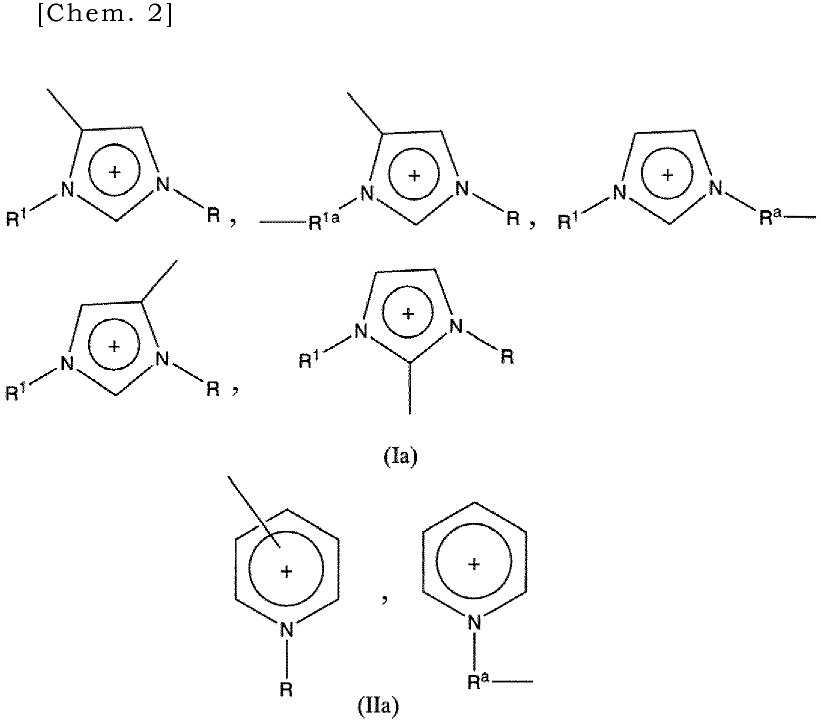
*-[R^{a}-NR_{y-1}H_{3-y}]⁺ (IIIa)
_{*}-[R^{a}-PR_{y-1}H_{3-y}]⁺ (IVa)
where (i) R and R¹, which may be identical or different, each represent a linear or branched C1-C16 alkyl group or a hydrogen atom, the alkyl group containing at least one methylene group which can be substituted by an oxygen atom, (ii) R^{a} and R^{1a}, which may be identical or different, each represent a linear or branched C1-C12 alkylene group, the alkylene group containing at least one methylene group which can be substituted by an oxygen atom, (iii) y represents an integer of 1 to 3, and (iv) "*" represents a point at which cation site binds to another group.

6. The method as set forth in any one of claims 1 through 5, wherein
the at least one polymerizable functional group of each of the 1 st monomers is of at least one kind selected from the group consisting of (i) a group containing a carbon-carbon double bond, (ii) a group containing a carbon-carbon triple bond, (iii) an epoxy group, and (iv) a group containing an epoxy group.

7. The method as set forth in any one of claims 1 through 6, wherein
each of the 1st monomers is 3-(methacryloylamino)propyl-trimethylammonium chloride.

8. The method as set forth in any one of claims 1 through 7, wherein
the 2nd monomers are monomers of at least one kind selected from the group consisting of acrylamide and a derivative thereof, 2-hydroxyethyl methacrylate, 2-hydroxyethyl acrylate, hydroxypropyl acrylate, and vinylpyrrolidone.

9. The method as set forth in any one of claims 1 through 8, wherein
each of the 2nd monomers is N,N-dimethylacrylamide.

10. The method as set forth in any one of claims 1 through 9, wherein
a ratio of an amount (the number of moles) of the 2nd monomers added to an amount (the number of moles) of the 1st monomers added (2nd monomers/1st monomers) is not less than 1.

11. The method as set forth in any one of claims 1 through 10, wherein
the solution in the step (1) further contains a crosslinking agent.

12. The method as set forth in claim 11, wherein
the crosslinking agent is of at least one kind selected from the group consisting of N,N'-methylenebisacrylamide, N,N'-propylene-bis-acrylamide, di(acrylamidomethyl)ether, 1,2-diacrylamide ethylene glycol, 1,3-diacryloyl ethylene urea, ethylene diacrylate, N,N'-bisacrylic cystamine, triallyl cyanurate, and triallyl isocyanurate.

13. A method of producing an acid gas separation membrane, comprising:
a step (1) comprising producing a 1 st gel membrane by (i) casting, on a substrate, a solution containing an ionic liquid A and an ionic liquid B, the ionic liquid A being made up of 1 st monomers each of which is a molecule having at least one polymerizable functional group and (ii) polymerizing the 1 st monomers;
a step (2) comprising producing the DN gel membrane by (i) immersing the 1 st gel membrane in a solution containing 2nd monomers which are different from the 1 st monomers and (ii) polymerizing the 2nd monomers; and
a step (3) comprising producing the acid gas separation membrane by immersing the DN gel membrane in a solution which contains an ionic liquid C containing a group that reacts with an acid gas.
